# EUROPÄISCHE PATENTANMELDUNG

(11) **EP 0 856 714 A2**
(43) Veröffentlichungstag der Anmeldung: **05.08.1998**
(21) Anmeldenummer: 98100557.2
(22) Anmeldetag: 14.01.1998
(51) Int. Cl.: F25J 3/06

(54) **Verfahren und Vorrichtung zur Entfernung von kondensierbaren Komponenten aus Gasen und/oder Gasgemischen**

(30) Priorität: 31.01.1997 DE 19703681
(71) Anmelder: Linde Aktiengesellschaft, 65189 Wiesbaden (DE)
(72) Erfinder: Heninger, Rolf, Dipl.-Ing., 82041 Deisenhofen (DE)
(74) Vertreter: Kasseckert, Rainer

(57) **Zusammenfassung**

Die Erfindung betrifft ein Verfahren und eine Vorrichtung zur Entfernung von kondensierbaren Komponenten aus Gasen und/oder Gasgemischen. Es wird ein Kondensator vorgeschlagen, der innerhalb eines Gehäuses (2) mindestens zwei getrennte Kühlkreisläufe mit Wärmeaustauschflächen (4, 5) besitzt. Die Kühlkreisläufe werden wechselweise mit einem Kühlmittel beschickt, wobei jeweils der in Betrieb befindliche Teil der Wärmeaustauschflächen 4 mit der Zeit mit einer Eisschicht belegt wird, während die Eisschicht auf dem stillgelegten Teil der Wärmeaustauschflächen (5) durch Wärmeaustausch mit dem zu behandelnden Gasgemisch (11) abschmilzt. Auf diese Weise ist ein dauerhafter Betrieb des Kondensators auf wirtschaftliche Weise gewährleistet.

## Beschreibung

Die Erfindung betrifft ein Verfahren zur Entfernung von kondensierbaren Komponenten aus Gasen und/oder Gasgemischen, bei dem das Gas und/oder Gasgemisch in indirekten Wärmeaustausch mit einem Kühlmittel gebracht wird, wobei die kondensierbaren Komponenten auskondensieren und die auskondensierten Komponenten abgezogen werden, sowie eine Vorrichtung zur Durchführung des Verfahrens.

In der Gasaufbereitungstechnik, insbesondere bei der Gasreinigung, sind Methoden zur Kondensation von Gasbestandteilen weit verbreitet. Beispielsweise werden Lösemittel, Wasser oder andere kondensierbare Komponenten in Abluft- oder Prozeßgasströmen durch indirekten Wärmeaustausch mit einem Kühlmittel kondensiert. Als Wärmeaustauscher sind meist Rohrbündel- oder Rohrschlangenapparate vorgesehen. Je nach Anwendungsfall kommen die verschiedensten Kühlmittel in Frage. Bei der Wahl bestimmter Kühlmittel, insbesondere von flüssigem Stickstoff, können in den Wärmeaustauschern Bedingungen entstehen, die nicht nur zu einem Kondensieren, sondern auch zu einem Festfrieren der kondensierbaren Komponenten des Gasgemisches führen. Häufig frieren diese Komponenten auf Kühlleitungen der Wärmeaustauscher fest. Für einen dauerhaften Betrieb ist daher in der Regel eine redundante Auslegung des Kondensators notwendig. Dies bedeutet, daß mindestens zwei Wärmeaustauscher abwechselnd betrieben werden. Während der eine Wärmeaustauscher mit dem zu behandelnden Gasgemisch beaufschlagt wird, wird der andere Wärmeaustauscher abgetaut. Durch die dafür erforderlichen Umschaltventile und Abtaueinrichtungen entsteht ein erheblicher technischer Aufwand.

Der Erfindung liegt die Aufgabe zugrunde, ein Verfahren der eingangs genannten Art sowie eine Vorrichtung zur Durchführung des Verfahrens zur Verfügung zu stellen, die auf wirtschaftliche Weise einen dauerhaften Betrieb ermöglichen.

Diese Aufgabe wird verfahrensseitig erfindungsgemäß dadurch gelöst, daß wechselweise jeweils mindestens eine Wärmeaustauschfläche mit dem Kühlmittel beaufschlagt wird und jeweils mindestens eine zweite Wärmeaustauschfläche nicht mit dem Kühlmittel beaufschlagt wird, während das Gas und/oder Gasgemisch sowohl mit der mit dem Kühlmittel beaufschlagten als auch mit der mit dem Kühlmittel nicht beaufschlagten Warmeaustauschfläche in Wärmeaustausch gebracht wird.

Es ist also ein Kondensator vorgesehen, der mindestens zwei getrennte Kühlkreisläufe besitzt, von denen jeweils mindestens einer mit dem Kühlmittel beschickt wird. Während sich der in Betrieb befindliche Teil der Wärmeaustauschflächen mit der Zeit mit einer Eisschicht umgibt, kann diese auf dem stillgelegten Teil abschmelzen. Dies wird dadurch ermöglicht, daß einerseits insbesondere bei Kühlung mit flüssigem Stickstoff auf den Wärmeaustauschflächen Temperaturen herrschen können, die unter dem Gefrierpunkt der auszukondensierenden Gasbestandteile liegen, wodurch sich eine Eisschicht bilden kann. Andererseits liegt die Temperatur des Gasstroms jedoch in der Regel noch über dem Gefrierpunkt der Gasbestandteile. Daher kann der Gasgemischstrom den stillgelegten Teil der Wärmeaustauschflächen abschmelzen, wobei das auf diese Weise flüssig gewordene Kondensat abtropft und das Gas und/oder Gasgemisch selbst abgekühlt wird.

Vorzugsweise werden das Kühlmittel und das Gas und/oder Gasgemisch im Gegenstrom zueinander geführt.

Gemäß einer bevorzugten Ausführungsform der Erfindung werden der Wechsel von einer Beaufschlagung einer Wärmeaustauschfläche mit dem Kühlmittel zu einer Nichtbeaufschlagung der Wärmeaustauschfäche mit dem Kühlmittel und umgekehrt taktweise durchgeführt, wobei die Taktzeit so eingestellt wird, daß die Zeit, in der die Wärmeaustauschfläche nicht beaufschlagt wird, ausreicht, um auf der Wärmeaustauschfläche gebildete Ausfrierungen durch den Wärmekontakt mit dem Gas und/oder Gasgemisch abzuschmelzen. Zweckmäßigerweise wird die Taktzeit automatisch durch einen Sensor gesteuert, der Ausfrierungen auf den Wärmeaustauschflächen erkennt.

Die geeignete Wahl des Kühlmittels hängt vom speziellen Anwendungsfall ab und wird im wesentlichen von Gefrierpunkt und Siedepunkt der auszukondensierenden Gasbestandteile bestimmt. In den meisten Fällen wird der Einsatz von flüssigem Stickstoff am zweckmäßigsten sein.

Eine Vorrichtung zur Durchführung des Verfahrens weist Wärmeaustauschflächen auf, die mit einem Kühlmittel beaufschlagbar sind und mit einem Gasraum in Wärmekontakt stehen, welcher mit dem Gas und/oder Gasgemisch beaufschlagbar ist.

Die gestellte Aufgabe wird vorrichtungsseitig erfindungsgemäß dadurch gelöst, daß die Wärmeaustauschflächen in mindestens zwei Gruppen aufgeteilt sind, die mit demselben Gasraum (11) in Wärmekontakt stehen, jedoch mit getrennten Kühlmittelzuleitungen verbunden sind, welche wechselweise zu- und abschaltbar sind.

Vorzugsweise sind die Wärmeaustauschflächen so angeordnet, daß jeweils eine Wärmeaustauschfläche einer Gruppe zu mindestens einer Wärmeaustauschfläche einer anderen Gruppe benachbart ist. Die Wärmeaustauschflächen der verschiedenen Gruppen sind zweckmäßigerweise gleichmäßig über den Querschnitt des Gehäuses verteilt angeordnet.

In der Praxis sind die Wärmeaustauschflächen bevorzugt als Leitungen, insbesondere als Rohre, ausgebildet, wobei die Rohre vorteilhafterweise zu Gruppen von Rohrbündeln oder Rohrschlangen zusammengefaßt sind.

Durch den Übergang von einer äußeren Redundanz, bei der mindestens zwei wechselweise arbeitende Kondensatoren verwendet werden, auf die erfindungsgemäß vorgeschlagene innere Redundanz ergeben sich wesentliche Kosteneinsparungen. Die Meß- und Regeltechnik kann deutlich vereinfacht werden, durch die kompakte Bauweise wird der Platzbedarf stark reduziert und Kälteverluste werden minimiert.

Die Erfindung eignet sich zur Aufbereitung aller denkbaren Gas- und/oder Gasgemischströme, die kondensierbare Komponenten enthalten. Mit Vorteil ist die Erfindung insbesondere bei der Reinigung von Abluft- oder Prozeßgasströmen einsetzbar. Als Beispiel sei hier die Rückgewinnung von Lösemitteln aus Abgasströmen genannt. Prinzipiell ist die vorgeschlagene Bauart auch für die Kühlung von Flüssigkeiten geeignet.

Im folgenden soll die Erfindung an Hand eines in einer Figur schematisch dargestellten Ausführungsbeispiels näher erläutert werden.

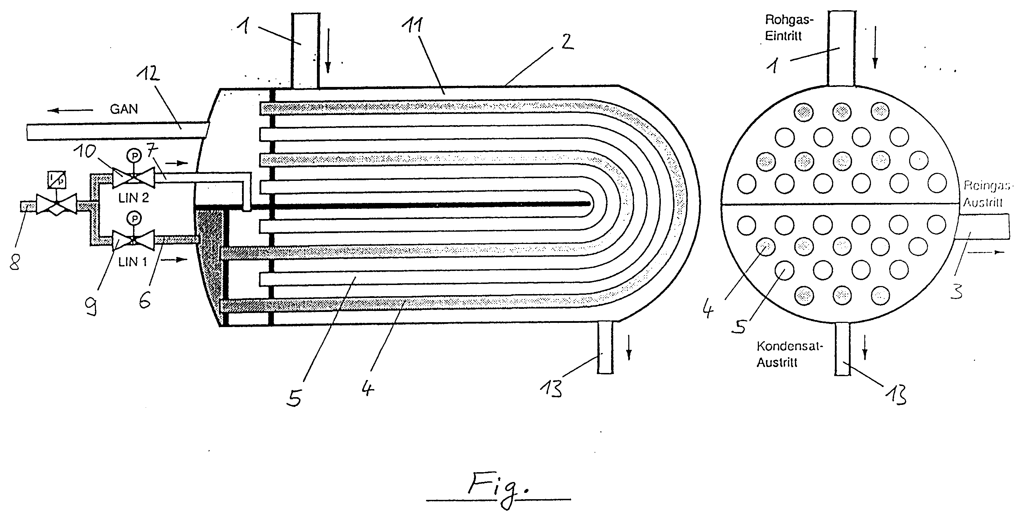

In der Figur sind auf der linken Seite ein Längsschnitt und auf der rechten Seite ein Querschnitt eines Kondensators mit interner Redundanz dargestellt. Der aufzubereitende Gasstrom gelangt über eine Gaszuleitung 1 in das Gehäuse 2 des Kondensators. Über eine Gasableitung 3 verläßt das aufbereitete Gas den Kondensator, während die auskondensierten Komponenten über eine Kondensatableitung 13 abgezogen werden. Im Gegenstrom zum Gasstrom wird flüssiger Stickstoff durch innerhalb des Gehäuses 2 angeordnete Rohrleitungen hindurchgeschickt, die in zwei Gruppen 4 und 5 unterteilt sind. Die beiden Gruppen 4 und 5 werden über separate Flüssigstickstoffzuleitungen 6 und 7 mit flüssigem Stickstoff versorgt. Die Flüssigstickstoffzuleitungen 6 und 7 zweigen von einer gemeinsamen Flüssigstickstoffversorgungsleitung 8 ab. Mittels Steuerventilen 9 und 10 werden die beiden Gruppen 4 und 5 der Rohrleitungen wechselweise mit flüssigem Stickstoff beaufschlagt. Durch indirekten Wärmeaustausch mit dem Gasstrom, der durch einen Gasraum 11 innerhalb des Gehäuses 2 strömt, verdampft der Stickstoff und verläßt schließlich als gasförmiger Stickstoff über Leitung 12 das Gehäuse 2.

Der Kondensator weist also zwei getrennte Kühlkreisläufe 4 und 5 auf, von denen jeweils nur einer mit dem Kühlmittel beschickt wird. Während sich der in Betrieb befindliche Teil 4 der Kühlleitungen mit der Zeit mit einer Eisschicht umgibt, kann diese auf dem stillgelegten Teil 5 abschmelzen. Einerseits herrschen nämlich auf den Kühlleitungen 4 Temperaturen, die unter dem Gefrierpunkt der auszukondensierenden Gasbestandteile liegen, wodurch sich eine Eisschicht bildet. Andererseits liegt die Temperatur des Gasstroms noch über dem Gefrierpunkt der auszukondensierenden Komponenten. Daher schmilzt der Gasstrom die Eisschicht auf dem stillgelegten Teil 5 der Kühlleitungen ab, wobei das so flüssig gewordene Kondensat abtropft und das Gas selbst abgekühlt wird.

## Patentansprüche

1. Verfahren zur Entfernung von kondensierbaren Komponenten aus Gasen und/oder Gasgemischen, bei dem das Gas und/oder Gasgemisch in indirekten Wärmeaustausch mit einem Kühlmittel gebracht wird, wobei die kondensierbaren Komponenten auskondensieren und die auskondensierten Komponenten abgezogen werden, **dadurch gekennzeichnet**, daß wechselweise jeweils mindestens eine Wärmeaustauschfläche (4) mit dem Kühlmittel beaufschlagt wird und jeweils mindestens eine zweite Wärmeaustauschfläche (5) nicht mit dem Kühlmittel beaufschlagt wird, während das Gas und/oder Gasgemisch (11) sowohl mit der mit dem Kühlmittel beaufschlagten als auch mit der mit dem Kühlmittel nicht beaufschlagten Wärmeaustauschfläche in Wärmeaustausch gebracht wird.

2. Verfahren nach Anspruch 1, dadurch gekennzeichnet, daß das Kühlmittel und das Gas und/oder Gasgemisch im Gegenstrom zueinander geführt werden.

3. Verfahren nach Anspruch 1 oder 2, dadurch gekennzeichnet, daß der Wechsel von einer Beaufschlagung einer Wärmeaustauschfläche (4, 5) mit dem Kühlmittel zu einer Nichtbeaufschlagung der Wärmeaustauschfläche mit dem Kühlmittel und umgekehrt taktweise erfolgen, wobei die Taktzeit so eingestellt wird, daß die Zeit, in der die Wärmeaustauschfläche (4, 5) nicht beaufschlagt ist, ausreicht, um auf der Wärmeaustauschfläche (4, 5) gebildete Ausfrierungen durch den Wärmekontakt mit dem Gas und/oder Gasgemisch abzuschmelzen.

4. Verfahren nach Anspruch 3, dadurch gekennzeichnet, daß die Taktzeit automatisch durch einen Sensor gesteuert wird, der Ausfrierungen auf den Wärmeaustauschflächen (4, 5) erkennt.

5. Verfahren nach einem der Ansprüche 1 bis 4, dadurch gekennzeichnet, daß als Kühlmittel flüssiger Stickstoff verwendet wird.

6. Vorrichtung zur Entfernung von kondensierbaren Komponenten aus Gasen und/oder Gasgemischen mit Wärmeaustauschflächen, die mit einem Kühlmittel beaufschlagbar sind und mit einem Gasraum in Wärmekontakt stehen, welcher mit dem Gas und/oder Gasgemisch beaufschlagbar ist, dadurch gekennzeichnet, daß die Wärmeaustauschflächen (4, 5) in mindestens zwei Gruppen aufgeteilt sind, die mit demselben Gasraum (11) in Wärmekontakt stehen, jedoch mit getrennten Kühlmittelzuleitungen (6, 7) verbunden sind, welche wechselweise zu- und abschaltbar sind.

7. Vorrichtung nach Anspruch 6, dadurch gekennzeichnet, daß die Wärmeaustauschflächen (4, 5) so angeordnet sind, daß jeweils eine Wärmeaustauschfläche (4,) einer Gruppe zumindestens einer Wärmeaustauschfläche (5) einer anderen Gruppe benachbart ist.

8. Vorrichtung nach Anspruch 6 oder 7, dadurch gekennzeichnet, daß die Wärmeaustauschflächen (4, 5) der verschiedenen Gruppen gleichmäßig über den Querschnitt des Gehäuses (2) verteilt sind.

9. Vorrichtung nach einem der Ansprüche 6 bis 8, dadurch gekennzeichnet, daß die Wärmeaustauschflächen (4, 5) als Leitungen, insbesondere als Rohre, ausgebildet sind.

10. Vorrichtung nach Anspruch 9, dadurch gekennzeichnet, daß die Rohre zu Gruppen von Rohrschlangen oder Rohrbündel zusammengefaßt sind.
